# EUROPEAN PATENT SPECIFICATION

(11) **EP 0 656 466 B1**
(45) Date of publication and mention of the grant of the patent: **08.05.1996**
(21) Application number: 94119001.9
(22) Date of filing: 01.12.1994
(51) Int. Cl.: F02B 23/06, F02F 3/26

(54) **Combustion chamber structure for diesel engine**
Verbrennungskammerstruktur für eine Brennkraftmaschine
Structure de chambre de combustion pour moteur diesel

(30) Priority: 02.12.1993 JP 303118/93
(43) Date of publication of application: 07.06.1995
(73) Proprietor: TOYOTA JIDOSHA KABUSHIKI KAISHA, Aichi-ken (JP)
(72) Inventor: Itatsu, Toshiro, Toyota-shi, Aichi (JP); Yasunishi, Shunsuke, Toyota-shi, Aichi (JP); Kitano, Kouji, Toyota-shi, Aichi (JP)
(74) Representative: Grams, Klaus Dieter, Dipl.-Ing.

(56) References cited:
- EP-A- 0 295 520
- EP-A- 0 412 552
- PATENT ABSTRACTS OF JAPAN vol. 5, no. 187 (M-098) 26 November 1981 & JP-A-56 106 023 (HINO MOTORS) 24 August 1981
- PATENT ABSTRACTS OF JAPAN vol. 17, no. 392 (M-1450) 22 July 1993 & JP-A-05 071 348 (YANMAR DIESEL ENGINE) 23 March 1993
- PATENT ABSTRACTS OF JAPAN vol. 10, no. 331 (M-533) 11 November 1986 & JP-A-61 135 928 (MAZDA MOTOR CORP.) 23 June 1986
- PATENT ABSTRACTS OF JAPAN vol. 8, no. 96 (M-294) 4 May 1984 & JP-A-59 010 733 (ISUZU JIDOSHA KK) 20 January 1984

## Description

### TECHNICAL FIELD

The present invention relates generally to a direct injection diesel engine, and in particular to the structure of a combustion chamber formed in the diesel engine between a cylinder head and the top of a piston, into which fuel is injected by a injection nozzle.

### RELATED BACKGROUND ART

A conventional direct injection Diesel engine includes a single combustion chamber formed between the cylinder head and the top of the piston. An injection nozzle provided at the cylinder head injects fuel directly into the combustion chamber under high pressure. This type of combustion chamber includes a cavity formed in the top of the piston. During the compression stroke of the piston, air turbulence, produced in the cavity causes air to mix with the fuel. Accordingly, the shape of the cavity greatly affects the mixing of the air and fuel.

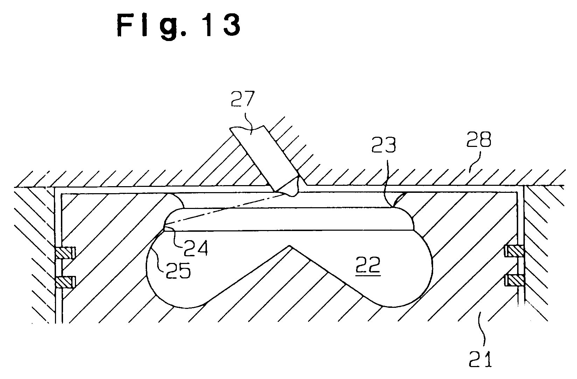

One example of the related art that addresses the shape of such a cavity is the "Structure of Combustion Chamber of Direct Injection Diesel Engine" disclosed in Japanese Unexamined Utility Model Publication No. 62-97224. As shown in Fig. 13, a cavity 22 formed in the top of a piston 21 in this conventional structure has a narrow portion 23 which separates the cavity's inner surface into upper and lower portions. The lower portion is shaped with two distinct curvatures. A first concave surface 24 extends into the cavity 22 from the narrow portion 23 toward a second concave surface 25. The second concave surface 25, extends even further into cavity 22 in a way discontinuous from surface 24. In this conventional structure, part of the fuel that is injected from an injection nozzle 27 provided at a cylinder head 28 sticks on the concave surface 24 where it evaporates due to heat and moving air. This promotes the mixing of the air and fuel, thus improving the combustion or fuel combustibility.

Since the inner surface in the cavity 22 below the narrow portion 23 forms the concave surfaces 24 and 25 in the conventional structure, the injection nozzle 27, should it operate under high injection pressure, may experience the following problem. Under high pressure conditions, the nozzle 27 injects a fine mist of fuel with minute droplets into the cavity 22. Accordingly, a large number of fine mists of fuel is spread over the upper concave surface 24. This will degrades the combustion or fuel combustibility. Thus, with conventional high pressure type fuel injection, it is more difficult for the fuel to vaporize from the concave surface 24. This will result in a poor air-fuel mixture, which directly impairs fuel combustibility.

For mixing the fuel with the air well, fuel diffusion due to the fuel's reflection off of the combustion chamber surface is an additional consideration. In order to maximize fuel diffusion, there should be an adequate reflection rate off of the surface walls of the combustion chamber. However, according to the conventional cavity 22 described above, i.e., with its two concave surfaces 24, 25, fuel reflection and hence fuel diffusion is minimal at best. Thus, the shape and structure of the convention combustion chamber do not lend themselves to maximizing fuel evaporation in the combustion chamber.

Yet an additional disadvantage of the above described related art concerns fuel injection timing. Should the timing of fuel injection into the chamber 22 change any time approximate to the end of the piston's compression stroke, the positions of the conventional concave surfaces 24 and 25, relative to the injected fuel, will also change. This change in relative positions between the injected fuel and the combustion chamber surfaces 24, 25 deteriorates the predictability with which the surfaces 24, 25 can adequately reflect injected fuel. This in turn inhibits dependable fuel ignition within the combustion cavity 22.

A further example of a direct injection Diesel combustion chamber having a single convex surface below the throat is known from JP-A-61 135 928.

### DISCLOSURE OF THE INVENTION

Accordingly, it is a primary objective of the present invention to provide a combustion chamber structure for a direct injection Diesel engine, which can more efficiently diffuse injected fuel regardless of the fuel injection timing of an injection nozzle, thus improving the fuel combustibility.

To achieve the foregoing and other objects and in accordance with the purpose of the present invention, a combustion chamber structure, according to claim 1, for a direct injection Diesel engine is provided. The combustion chamber has a space formed between a cylinder head and a top of a piston, a cavity formed at the top of the piston and a narrow portion, provided near an opening of the cavity, for separating the cavity into two parts, and an injection nozzle for directly injecting fuel toward an inner surface of said cavity. The structure has a plurality of convex surfaces formed continuous to one another between the narrow portion and a bottom of the cavity, each of said convex surfaces extending along the entire circumference of the inner surface of the cavity.

### BRIEF DESCRIPTION OF THE DRAWINGS

The invention, together with objects and advantages thereof, may best be understood by reference to the following description of the presently preferred embodiments together with the accompanying drawings in which:

Figs. 1 through 12 illustrate a combustion chamber structure for a direct injection Diesel engine according to one embodiment of the present invention.
Fig. 1 is a cross-sectional view showing the structure of a combustion chamber;
Fig. 2 is a partial cross-sectional view of a piston, showing a part of a cavity included in the combustion chamber;
Fig. 3 is a partial cross-sectional view of the piston, illustrating the relation among designed sizes of the cavity;
Fig. 4 is a partial cross-sectional view of the piston, showing the function of the cavity when the piston reaches the top dead center;
Fig. 5 is a partial cross-sectional view of the piston, also showing the function of the cavity when the piston reaches the top dead center;
Fig. 6 is a partial cross-sectional view of the piston, showing the function of the cavity after the piston has reached the top dead center;
Fig. 7 is a graph showing the relation between the crank angle and the swirl ratio in the cavity according to the structure of this embodiment as compared with that of a conventional combustion chamber structure.
Fig. 8 is a graph showing the relation between the crank angle and the swirl ratio in the combustion chamber according to the structure of this embodiment as compared with that of the conventional combustion chamber structure.
Fig. 9 is a partial cross-sectional view of the piston, showing the diffusion distribution, etc. of fuel available in the cavity when the piston reaches the top dead center;
Fig. 10 is a partial cross-sectional view of the piston, showing the diffusion distribution, etc. of fuel in the conventional structure as compared with that in Fig. 9;
Fig. 11 is a partial cross-sectional view of the piston, showing the diffusion distribution, etc. of fuel available in the cavity after the piston reaches the top dead center; and
Fig. 12 is a partial cross-sectional view of the piston, showing the diffusion distribution, etc. of fuel in the conventional structure as compared with that in Fig. 11.
Fig. 13 is a cross-sectional view showing the conventional combustion chamber structure.

### DETAILED DESCRIPTION OF SPECIAL EMBODIMENT

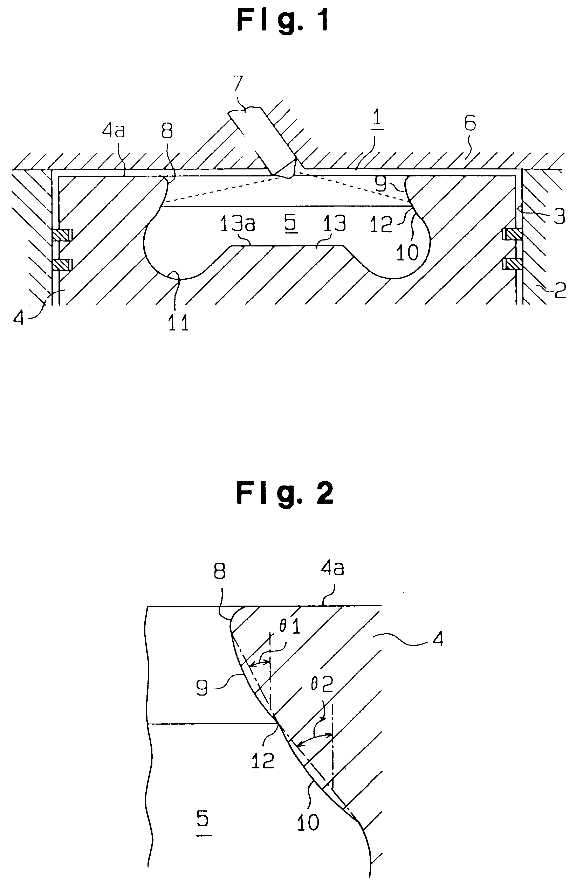

A combustion chamber structure for a direct injection Diesel engine according to one embodiment of the present invention will now be described in detail with reference to Figs. 1 to 12.

Fig. 1 is a cross-sectional view showing the structure of a combustion chamber 1 in a Diesel engine according to this embodiment. A cylinder block 2, has a cylinder bore 3 that slidably receives a piston 4 having a cavity 5 in its top center portion. A cylinder head 6 located above the block 2 closes the bore 3. The combustion chamber 1 includes space, surrounded by the piston 4, bore 3 and head 6, and a cavity 5. An injection nozzle 7 of a high pressure injection type, provided at the head 6, directly injects fuel from its distal end toward the combustion chamber 1 under high pressure. The nozzle 7 injects a mist of fuel toward the inner surface of the cavity 5. It is well known that as the piston 4 moves up and down in the cylinder bore 3 in responsive to the movement of a crankshaft and a connecting rod (neither shown). The volume of the combustion chamber 1 changes according to the position of the piston as it reciprocates up and down in the bore 3. Fig. 1 shows the piston 4 at a top dead center (TDC) position in bore 3. As is well known, a intake port and an exhaust port (neither shown) provided in the cylinder head 6 guides air into the combustion chamber 1 or guides the exhaust gas out of this chamber 1. Further, a intake valve and an exhaust valve (neither shown) provided at the head 6 open or close the intake port and exhaust port, respectively. In this embodiment, a helical intake port is employed to swirl the air guided into the combustion chamber 1 from the intake port.

During the compression stroke of the piston 4, air turbulence occurs at the cavity 5. During the compression stroke, only the heat from the compressed air is used to ignite and burn the fuel. During the last several degrees of camshaft rotation prior to TDC when fuel is injected into the cavity 5 from the injection nozzle 7, the air and fuel are thoroughly mixed, compressed and burned in the cavity 5. This is the well known structure and function of the combustion chamber 1 of a direct injection diesel engine.

A main feature of the present embodiment of this invention, is the design and shape of the cavity 5 which improves the mixture of air and fuel supplied to the cavity 5. Fig. 2 is a cross-sectional view of the piston 4, showing in enlargement a part of the cavity 5 in Fig. 1. As apparent from Figs. 1 and 2, the cavity 5 has a narrow portion 8 near its opening, which separates the cavity 5 to upper and lower portions. This narrow portion 8 has a surface curved outward and which is smoothly continuous to the top 4a of the piston 4. The inner surface of the cavity 5 below this narrow portion 8 has two different convex surfaces 9 and 10 curved outward and continuous in the circumferential direction. Those convex surfaces 9 and 10 are discontinuous upper and lower curved surfaces extending from the narrow portion 8 to a bottom 11 of the cavity 5. The portion between the convex surfaces 9 and 10 is an interface portion 12. The upper convex surface 9 is smoothly continuous to the narrow portion 8. The lower convex surface 10 is smoothly continuous to the bottom 11. Further, the inner surface of the bottom 11 of the cavity 5 has an inwardly curved surface, with a projection 13 formed at the center of the bottom 11 in the shape of a truncated cone. The projection 13 has a flat top 13a.

In this embodiment, the position of the distal end of the injection nozzle 7 (ignition point P to be described later) is set in such a manner that as the nozzle 7 injects a spray of fuel when the piston 4 approaches the top dead center, the fuel hits the convex surfaces 9 and 10 over a certain range about the interface portion 12.

In this embodiment, the curvature of both convex surfaces 9 and 10 is set to about "100 mm". As shown in Fig. 2, the angle θ1 formed by the chord defined by the upper convex surface 9 and the axial line of the piston 4 is set to about "19.5 degrees". Likewise, the angle θ2 formed by the chord defined by the lower convex surface 10 and the axial line of the piston 4 is set to about "35.0 degrees".

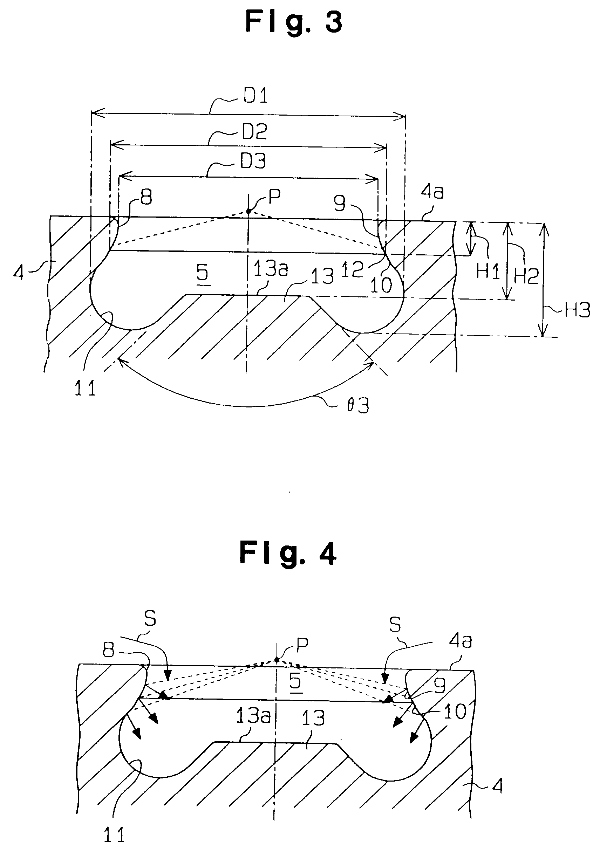

Fig. 3 is a partial cross-sectional view of the piston 4, illustrating the relation among the other various sizes concerning the cavity 5. The various sizes about the cavity 5 are set as follows in this embodiment. The angle θ3 of the outer surface of the projection 13 is "90 degrees". It is preferable that this angle θ3 be set in a range of "85 to 95 degrees". The maximum inside diameter D1 of the cavity 5 is "50.6 mm". The inside diameter D2 of the interface portion 12 is "44.6 mm". The minimum inside diameter D3 of the narrow portion 8 is "41.9 mm". The depth H1 from the top 4a of the piston 4 to the interface portion 12 is "5.5 mm". The depth H2 from the top 4a of the piston 4 to the top 13a of the projection 13 is "12.5 mm". Further, the depth H3 from the top 4a of the piston 4 to the lowest point of the cavity 5 is "18.5 mm". The inside diameter of the bore 3 is "94 mm" in this embodiment.

The function and advantages of the above-described combustion chamber structure will now be discussed. In the intake stroke before the compression stroke of the piston 4, as the piston moves downward, the air is supplied to the combustion chamber 1 through the intake port. At this time, the air is swirled in the cavity 5.

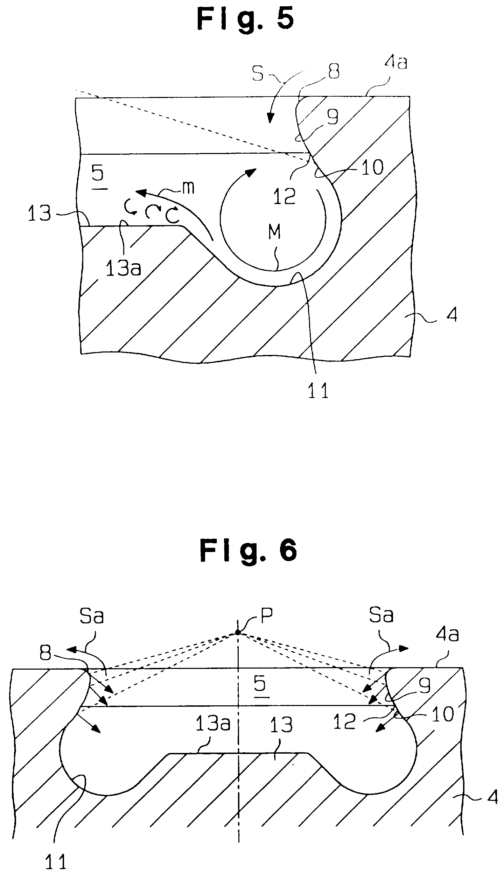

When the piston 4 moves upward to enter the compression stroke thereafter, the air in the combustion chamber 1 is gradually compressed and an air current (squish current) S flowing toward the cavity 5 is produced between the piston 4 and the head 6 as shown in Figs. 4 and 5. Since the narrow portion 8 is continuous to the top portion 4a of the piston 4, the squish current S is uninterruptedly supplied to the cavity 5 at this time. Due to the projection 13 formed in the lower central portion of the cavity 5, the squish current S and swirl current M are mixed in the space between the projection 13 and the bottom 11, amplifying the air swirl current M around the projection 13. A part of the swirl current M moves toward the top 13a of the projection 13 along the outer surface thereof causing air turbulence near the edge of the top 13a, as indicated by an arrow m in Fig. 5.

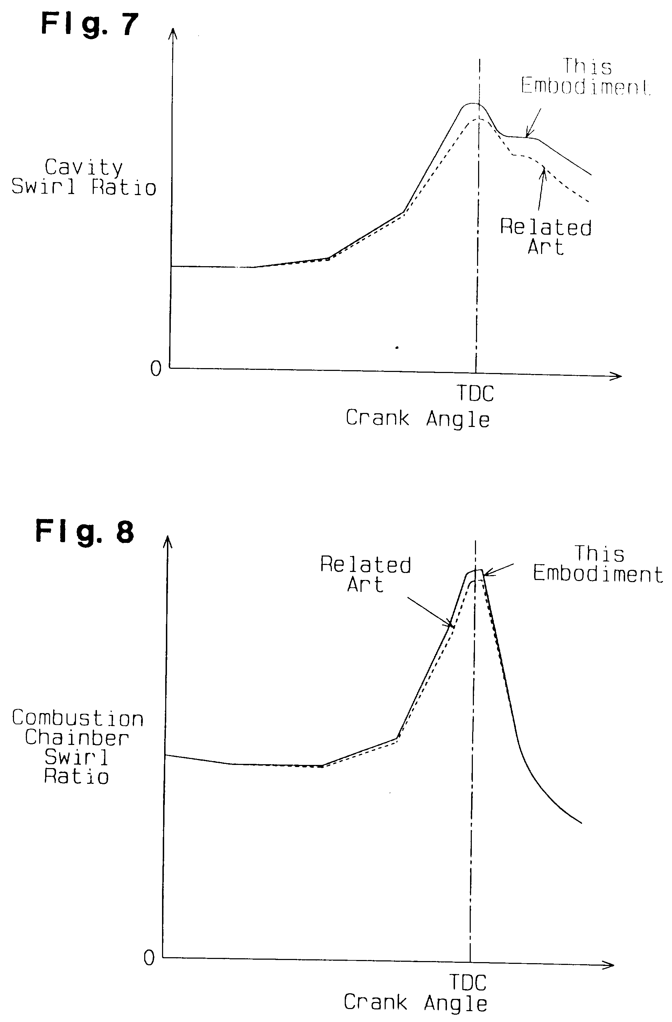

Fig. 7 is a graph illustrating the swirl ratio occurring during near the top dead center of the compression stroke in the cavity of the piston described in the present invention (solid line). This is in contrast to the swirl ratio occurring in cavities of conventional pistons (dash line). Fig. 8 presents a similar graph showing the relation between the crank angle and the swirl ratio in the combustion chamber of the present invention in contrast to that of the conventional combustion chamber structure. It is apparent from these graphs, that the swirl ratio of the present invention is particularly better than prior designs, especially in the vicinity of the top dead center (TDC).

When the piston 4 approaches the top dead center at the end of the compression stroke, the injection nozzle 7 is actuated to inject fuel under high pressure from the injection point P as indicated by the broken line in Fig. 4. At this time, the injected spray of fuel hits and reflects off on the convex surfaces 9 and 10 over a certain range about the interface portion 12. In this case, fuel hitting the upper convex surface 9 reflects mainly toward the projection 13 at the center of the cavity 5. Fuel hitting the lower convex surface 10 reflects mainly toward the bottom 11 of the cavity 5. The result of the reflections occurring at surfaces 9 and 10 is that it will be less likely that fuel will stick on the convex surfaces 9 and 10 and remain there. The swirl current M, amplified in the space between the bottom 11 and the projection 13, mixes the fuel reflected off of the convex surfaces 9 and 10. The reflected fuel swirls lower to the bottom 11 than it would, if there were no swirl current. Accordingly, the fuel injected from the injection nozzle 7 under high pressure can be diffused more effectively, thus improving the ignitability of the fuel. This further improves the combustion or fuel combustibility in the combustion chamber 1.

Since the top 13a of the projection 13 is flat in this embodiment, proper space can be provided above the top 13a. Therefore, the fuel toward the projection 13 at the convex surfaces 9 and 10 can spread in the space above the projection 13. As a result, all the fuel reflected from convex surfaces 9 and 10 can be diffused over a wide range of the cavity 5. Moreover, the fuel toward the projection 13 can be diffused effectively by the air turbulence or the like produced at the top portion 13a in this embodiment. In this respect, the combustibility of fuel in the combustion chamber 1 can even be further improved.

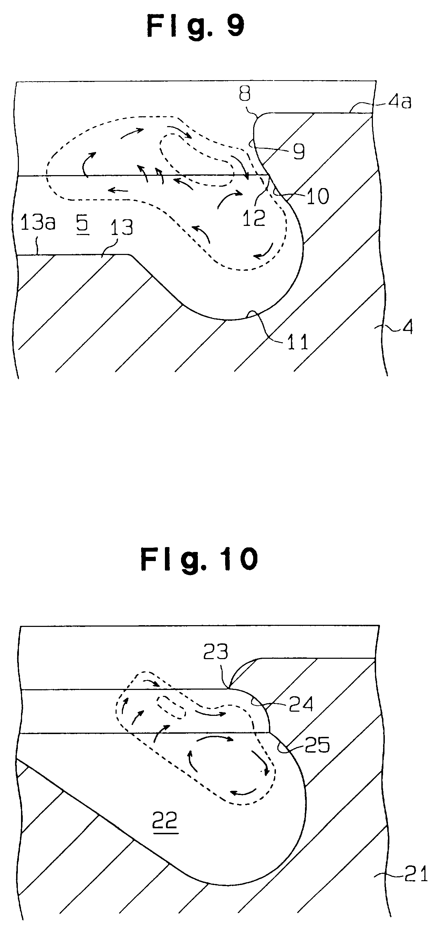

Fig. 9 shows the diffusion distribution, etc. of fuel available when the piston 4 reaches the top dead center according to the combustion chamber structure of this embodiment. Fig. 10 shows the diffusion distribution, etc. of fuel in the conventional structure as compared with that in Fig. 9. Figs. 9 and 10 both illustrate the results of experimental simulations under the same conditions; the broken line in each diagram shows the diffusion distribution. It is apparent from the comparison between both Figs. 9 and 10, the fuel diffusion distribution according to this embodiment spreads over a wide range in the cavity 5 from above the projection 13 to the bottom portion 11. Accordingly, after the fuel is ignited, the flame spreads quickly in the combustion chamber 1, which is advantageous from the viewpoint of the fuel combustibility.

In addition, the above described fuel reflection off of the upper and lower convex surfaces 9 and 10 occurs even though the fuel injection timing varies slightly with respect to the movement of the piston 4. For example, suppose that after the injection timing is delayed and the piston 4 reaches the top dead center, the injection nozzle 7 is actuated to inject fuel under high pressure from the injection point P as indicated by the broken line in Fig. 6. At this time, the injected fuel hits and reflects off of the convex surfaces 9 and 10 with the upper convex surface 9 as the center. Suppose further that the fuel is reflected toward the projection 13 and the bottom 11, reducing the amount of fuel remaining stuck on the convex surfaces 9 and 10. In this case, as the piston 4 has already started descending, the air current directing outward from the cavity 5 (counter squish current) Sa is produced between the piston 4 and head 6, as shown in Fig. 6. The fuel reflected at the convex surfaces 9 and 10 flows higher than the intrinsic reflecting direction due to the counter squish current Sa. Accordingly, the fuel reflected at the convex surfaces 9 and 10 can be diffused more effectively, thus further improving the combustion or fuel combustibility in the combustion chamber 1.

Further, even after the piston 4 reaches the top dead center, proper space can be provided above the projection 13 in this embodiment. Therefore, the fuel reflected at the convex surfaces 9 and 10 toward the projection 13 can spread in the space above the projection 13. As a result, all the fuel reflected at the convex surfaces 9 and 10 can be diffused over a wide range of the cavity 5. In addition, the fuel reflected at the convex surfaces 9 and 10 toward the projection 13 can be diffused effectively by the air turbulence or the like produced at the top 13a, so that the combustibility of fuel in the combustion chamber 1 can be improved.

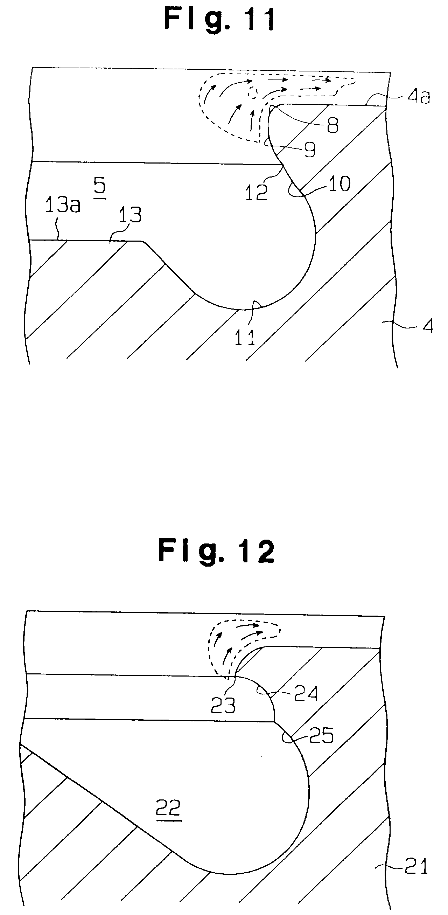

Fig. 11 shows the diffusion distribution, etc. of fuel available after the piston 4 reaches the top dead center according to the combustion chamber structure of this embodiment. Fig. 12 shows the diffusion distribution, etc. of fuel in the conventional structure as compared with that in Fig. 11. Figs. 11 and 12 both illustrate the results of experimental simulations under the same conditions; the broken line in each diagram shows the diffusion distribution. It is apparent from the comparison between Figs. 11 and 12, the fuel diffusion distribution according to this embodiment spreads widely in the cavity 5 toward the top 4a of the piston 4 from the narrow portion 8 of the cavity 5. This means that even after the piston 4 reaches the top dead center, fuel-air distribution still occurs. It is therefore apparent that even after the piston 4 reaches the top dead center, improved fuel combustibility occurs with the design of the present invention.

In other words, as the cavity 5 has the upper and lower convex surfaces 9 and 10 in this embodiment, the fuel is well reflected over a wide range of the convex surfaces 9 and 10 even though the timing of fuel injection from the injection nozzle 7 with respect to the movement of the piston 4 varies slightly. Regardless of a variation in the timing of fuel injection from the injection nozzle 7, therefore, the injected fuel can be diffused more effectively, thus improving the fuel combustibility.

Since according to the present invention, the amount of fuel that sticks on the convex surfaces 9 and 10 is less than that of conventional designs, it is possible to suppress the reduction in the temperature of the wall of the cavity 5 due to the evaporation of the stuck fuel. Similarly, it is also possible to suppress the reduction in the temperature of the compressed air around the end of the compression stroke of the piston 4. This improves the fuel ignitability, and thus improves the engine starting characteristics at a low operating temperatures. Consequently, this reduces the production of white smoke from the engine exhaust.

Further, since the convex surfaces 9 and 10 are formed with a relatively large curvature in this embodiment, the convex surfaces 9 and 10 do not extend more than needed into the cavity 5. This can reduce the thermal load (thermal stress) at the convex surfaces 9 and 10, thus improving the mechanical reliability about the convex surfaces 9 and 10.

Although only one embodiment of the present invention has been described herein, it should be apparent to those skilled in the art that the present invention may be embodied in many other specific forms without departing from the spirit or scope of the invention. Particularly, it should be understood that this invention may be embodied in the following forms.

Although the upper and lower convex surfaces 9 and 10 are provided on the inner surface of the cavity 5 in this embodiment, three or four convex surfaces may also be formed on the inner surface of cavity 5.

The truncated conical projection 13 is provided at the center of the bottom 11 of the cavity 5 in the above-described embodiment. Alternatively, a conical projection may be provided at the center of the bottom of the cavity, or the projection may even be removed. With regard to the diffusion of the fuel reflected at the convex surfaces, this modified case can provide the same advantages as in the case where the truncated conical projection is provided, by amplifying the swirl fed into the cavity from the intake port and by modifying the shape of the intake port or the like.

A combustion chamber (1) formed between a cylinder head (6) and the top of a piston (4) has a cavity (5) formed at the top of the piston (4). An injection nozzle (7) provided at the cylinder head (6) injects fuel toward the cavity (5) under high pressure. An upper and lower convex surfaces (9, 10) formed over an area between a narrow portion (8) and a bottom (11) of the cavity (5) are curved outward and are continuous in the circumferential direction. The convex surfaces (9, 10) reflect the fuel from the nozzle (7) toward the center of the cavity (5). A projection (13) formed at the bottom center of the cavity (5) has a truncated conical shape. The projection (13) causes the air turbulence in the cavity to diffuse the fuel reflected at the convex surfaces.

## Claims

1. A combustion chamber structure for a direct injection Diesel engine, said combustion chamber (1) having a space formed between a cylinder head (6) and a top of a piston (4), a cavity (5) formed at the top of the piston (4) and a narrow portion (8), provided near an opening of the cavity (5), for separating the cavity (5) into two parts, and an injection nozzle (7) for directly injecting fuel toward an inner surface of said cavity (5) characterized by:
a plurality of convex surfaces (9, 10) formed continuous to one another between the narrow portion (8) and a bottom (11) of the cavity (5), each of said convex surfaces (9, 10) extending along the entire circumference of the inner surface of the cavity (5).

2. The combustion chamber structure according to Claim 1, wherein said cavity (5) has a truncated conical projection (13) at a center of the bottom (11) of the cavity (5).

3. The combustion chamber structure according to Claim 2, wherein said projection (13) has a flat top (13a).

4. The combustion chamber structure according to Claim 1, wherein said injection nozzle (7) is of a high pressure injection type.

5. The combustion chamber structure according to Claim 1, wherein said top of the piston (4) has a flat surface (4a), and said narrow portion (8) is smoothly continuous to the flat surface (4a) of the piston (4).

6. The combustion chamber structure according to Claim 1, wherein the topmost convex surface (9) is formed smoothly continuous to the narrow portion (8).

7. The combustion chamber structure according to Claims 1 or 6, wherein the lowermost convex surface (10) is formed smoothly continuous to the bottom (11) of the cavity (5).

8. The combustion chamber structure according to Claim 1, wherein said convex surfaces (9, 10) are provided in a pair and respectively disposed at upper and lower positions on said inner surface of the cavity (5), said upper and lower positions being continuous by way of an interface portion (12), whereby said injection nozzle (7) injects the fuel toward a region including the interface portion (12) when said piston (4) substantially reaches a top dead center of the piston (4).

9. The combustion chamber structure according to Claim 8, wherein said region to which the injection nozzle (7) injects the fuel includes the upper and lower convex surfaces (9, 10).

## Patentansprüche

1. Verbrennungskammerstruktur für einen direkt einspritzenden Dieselmotor, wobei die Verbrennungskammer (1) folgende Elemente hat:
einen Raum, der zwischen einem Zylinderkopf (6) und einer Oberseite eines Kolbens (4) ausgebildet ist,
eine Aushöhlung (5), die an der Oberseite des Kolbens (4) ausgeformt ist und
einen Einschnürabschnitt (8), der nahe einer Öffnung der Aushöhlung (5) angeordnet ist, um die Aushöhlung (5) in zwei Teile zu trennen sowie
eine Einspritzdüse (7) für das direkte Einspritzen von Kraftstoff in Richtung auf eine innere Fläche der Aushöhlung (5),
gekennzeichnet durch
eine Mehrzahl von konvexen Flächen (9, 10), die miteinander zusammenhängend zwischen dem Einschnürabschnitt (8) und einem Boden (11) der Aushöhlung (5) ausgeformt sind, wobei sich jede der konvexen Flächen (9, 10) entlang des gesamten Umfangs der inneren Fläche der Aushöhlung erstreckt.

2. Verbrennungskammerstruktur nach Anspruch 1, dadurch gekennzeichnet, daß
die Aushöhlung (5) einen kegelstumpfartigen konischen Vorsprung (13) in einer Mitte des Bodens der Aushöhlung (5) hat.

3. Verbrennungskammerstruktur nach Anspruch 2, dadurch gekennzeichnet, daß
der Vorsprung (13) eine flache Oberseite (13a) hat.

4. Verbrennungskammerstruktur nach Anspruch 1, dadurch gekennzeichnet, daß
die Einspritzdüse (7) eine Einspritzdüse der Hochdruckbauart ist.

5. Verbrennungskammerstruktur nach Anspruch 1, dadurch gekennzeichnet, daß
die Oberseite des Kolbens (4) eine flache Oberfläche (4a) hat, wobei der Einschnürabschnitt (8) glatt in die flache Oberfläche (4a) des Kolbens (4) übergeht.

6. Verbrennungskammerstruktur nach Anspruch 1, dadurch gekennzeichnet, daß
die oberste konvexe Fläche (9) glatt in den Einschnürabschnitt (8) übergehend ausgeformt ist.

7. Verbrennungskammerstruktur nach Anspruch 1 oder 6, dadurch gekennzeichnet, daß
die unterste konvexe Fläche (10) glatt in den Boden (11) der Aushöhlung (5) übergehend ausgeformt ist.

8. Verbrennungskammerstruktur nach Anspruch 1, dadurch gekennzeichnet, daß
die konvexen Flächen (9, 10) im Paar angeordnet sind und jeweils an oberen sowie unteren Positionen an der inneren Fläche der Aushöhlung angeordnet sind, wobei die oberen und unteren Abschnitte durch einen Übergangsabschnitt (12) zusammenhängen, wodurch die Einspritzdüse (7) den Kraftstoff in Richtung eines Bereichs einspritzt, der den Übergangsabschnitt (12) beinhaltet, wenn der Kolben (4) einen oberen Totpunkt des Kolbens (4) erreicht.

9. Verbrennungskammerstruktur nach Anspruch 8, dadurch gekennzeichnet, daß
der Bereich, zu dem die Einspritzdüse (7) den Kraftsstoff einspritzt, die oberen und unteren konvexen Flächen beinhaltet.

## Revendications

1. Une structure de chambre de combustion pour un moteur Diesel à injection directe, ladite chambre de combustion (1) comprenant un espace formé entre une culasse (6) et la partie supérieure ou tête d'un piston (4), une cavité (5) formée à la partie supérieure (4) du piston et une partie étroite (8), prévue à proximité d'une ouverture de la cavité (5), pour séparer la cavité (5) en deux parties, et une buse d'injection (7) pour injecter du carburant directement vers une surface intérieure de ladite cavité (5), caractérisé par :
- une pluralité de surfaces convexes (9, 10) formées en continuité l'une par rapport à l'autre entre la partie étroite (8) et un fond (11) de la cavité (5), chacune desdites surfaces convexes (9, 10) s'étendant sur toute la circonférence de la surface intérieure de la cavité (5).

2. La structure de chambre de combustion selon la revendication 1, dans laquelle ladite cavité (5) présente une partie en saillie en tronconique (13) au centre du fond (11) de la cavité (5).

3. La structure de chambre de combustion selon la revendication 2, dans laquelle ladite partie en saillie (13) présente une partie supérieure plate (13a).

4. La structure de chambre de combustion selon la revendication 1, dans laquelle ladite buse à injection (7) est du type à injection à haute pression.

5. La structure de chambre de combustion selon la revendication 1, dans laquelle ladite partie supérieure du piston (4) présente une surface plate (4a), et ladite partie étroite (8) est raccordée de façon progressive et continue à la surface plate (4a) du piston (4).

6. La structure de chambre de combustion selon la revendication 1, dans laquelle la surface convexe la plus élevée (9) est formée de manière progressive et continue par rapport à la partie étroite (8).

7. La structure de chambre de combustion selon la revendication 1 ou 6, dans laquelle la surface convexe la plus basse (10) est formée de façon progressive et continue jusqu'au fond (11) de la cavité (5).

8. La structure de chambre de combustion selon la revendication 1, dans laquelle lesdites surfaces convexes (9, 10) sont prévues selon deux positions et sont respectivement disposées en position supérieure et en position inférieure sur ladite surface intérieure de la cavité (5), lesdites positions supérieure et inférieure étant continues par l'intermédiaire d'une partie d'interface (12), de telle manière que ladite buse d'injection (7) injecte le carburant en direction d'une zone comprenant la partie d'interface (12) lorsque ledit piston (4) atteint sensiblement le point mort du piston (4).

9. La structure de chambre de combustion selon la revendication 8, dans laquelle ladite zone vers laquelle la buse d'injection (7) injecte le carburant comporte les surfaces convexes supérieure et inférieure (9, 10).
